# EUROPEAN PATENT SPECIFICATION

(11) **EP 0 615 596 B1**
(45) Date of publication and mention of the grant of the patent: **21.08.1996**
(21) Application number: 92923948.1
(22) Date of filing: 30.11.1992
(51) Int. Cl.: F16L 59/10, F16L 59/02, F16L 58/10

(54) **IMPROVEMENTS RELATING TO PIPELINE INSULATION AND ANTICORROSION PROTECTION**
MASSNAHMEN ZUR VERBESSERUNG VON ISOLIERUNG UND KORROSIONSSCHUTZ VON ROHRLEITUNGEN
AMELIORATIONS RELATIVES A L'ISOLATION DE CONDUITS ET A LA PROTECTION ANTICORROSION

(30) Priority: 07.12.1991 GB 9126052; 24.06.1992 GB 9213397
(43) Date of publication of application: 21.09.1994
(73) Proprietor: ARNOTT, Thomas Cristopher, Alloa FK10 1JN (GB)
(72) Inventor: ARNOTT, Thomas Cristopher, Alloa FK10 1JN (GB)
(74) Representative: Pacitti, Pierpaolo A.M.E.
(86) International application number: GB9202221
(87) International publication number: WO9312370

(56) References cited:
- WO-A-89/12199
- FR-A- 2 538 077
- US-A- 4 660 861

## Description

This invention relates to the coating of pipelines and the like, particularly subsea pipelines and risers, but also other forms of ducting and piping, for the purpose of providing relatively high level thermal insulation and anticorrosion protection. The invention provides an improved coating method and an improved coated pipeline formed thereby.

Oil and gas are transported by steel pipes from subsea wells to fixed platforms or moored floating platforms. The oil and gas temperature at the wellhead is in the range of temperatures between 70°C and 130°C. The sea temperature at seabed level of the North Sea is in the range of temperatures of between 4°C and 8°C. Over a relatively short distance the oil and gas temperature is reduced to the surrounding sea temperature. This in turn increases oil viscosity and solidifies any waxes present, and in the case of gas will produce hydrate formation, drastically reducing flow and possibly causing blockage of the line.

Methods of overcoming these problems in the past have included:
a The injection of chemicals at the wellhead to prevent waxes forming. This method is expensive and not always effective, and is environmentally unacceptable as chemicals are entrained in the water which is present in oil wells and which is separated and dumped into the sea.
b The "pipe in a pipe" method consists of placing the oil pipe into a larger diameter pipe concentrically. The annulus formed is filled with a polyurethane foam. Polyurethane foam produces good insulating values but is low in mechanical strength and unable to resist seawater, therefore an outer steel pipe is required to provide resistance to hydrostatic forces and produce a waterproof barrier. This method of construction restricts the way a pipeline can be installed and is most suited to shallow water and short lengths of lines.
c Syntactic insulation is achieved by dispersing microspheres or insulating material particles into a matrix of elastomer plastic or epoxy. The introduction of microspheres or insulation particles into such a matrix greatly reduces the physical properties of the matrix material. The maximum amount normally considered acceptable is approximately 40% which improves the thermal insulation property of the matrix but in many instances not significantly enough to meet common insulation requirements.
d Laminated systems consist of a first layer of elastomer, normally extruded onto the pipe, a layer of insulation material, such as PVC foam or a similar closed cell foam able to resist hydrostatic pressures, followed by a further coat of elastomer. PVC foam has been applied in the past in the form of pre-formed, part-cylindrical shells and as helically wound strip of relatively thin material. The latter requires multiple layers to be applied. The assembled system is placed into an autoclave and cured under temperature and pressure to crosslink the elastomer and form a bond between the insulation material and the pipe. The laminated system produces a thermally efficient coating but has disadvantages. Spaces exist at the joints of the insulation material which are not filled by the elastomer. During the autoclaving, entrapped air can cause blistering of the outer cover of elastomer. If the outer coating, which is generally of low mechanical property, is breached during installation or on the sea bed, water floods the helical or circumferential joints and penetrates any striations in the insulation destroying thermal efficiency of the system.

A further proposal for applying PVC foam to form a laminated coating as discussed above is disclosed in FR-A-2538077 and WO/89/12199, wherein a relatively thick, elongate strip of PVC foam is formed with transverse V-shaped grooves, allowing a sufficient thickness of material to be wrapped around the pipe in a single layer. The grooved surface of the strip faces the pipe, and the grooves close up as the strip is wrapped around the circumference of the pipe. The grooves may be formed at an angle to the lateral edges of the strip allowing continuous helical winding. This approach simplifies the application of the PVC foam to the pipe, but the need for autoclaving remains, as do the associated problems caused by air trapped in voids in the wrapped PVC.

The present invention provides an improvement of this last approach, with the object of providing a thermally efficient insulation system with good mechanical strength, and which obviates or mitigates the above mentioned disadvantages of prior methods and materials.

In accordance with a first aspect of the present invention, there is provided a method of applying a thermally insulating anticorrosion coating to a pipe, comprising the steps of: applying a first, inner elastomeric, anticorrosion layer to the pipe; applying a layer of thermally insulating material over said first elastomeric layer in the form of striated, rigid, closed-cell, foamed material (as defined herein) wrapped around said pipe; and applying a second, outer elastomeric, protective layer over said insulating layer; wherein a predetermined gap is formed between sections of said wrapped insulating material sufficient to ensure penetration by said second layer of elastomeric material into said gaps so as to encapsulate said insulating material.

Preferably, said insulating material is PVC.

Preferably also, said first and second elastomeric layers are formed from polyurethane or epoxy.

Preferably also, said first elastomeric layer is formed from a thermally insulating material resistant to temperatures exceeding 95°C, suitably syntactic polyurethane

Preferably also, said insulating material is applied before cross-linking of said first elastomeric layer is complete.

Preferably also, said second elastomeric layer is applied by pouring or spraying, so as to fill said gaps and seal the ends of said striations.

Preferably also, a thin adhesive anticorrosion layer is applied to said pipe prior to the application of said first elastomeric layer.

Preferably also, said adhesive layer is epoxy or polyurethane adhesive.

Preferably also, an aggregate material is applied to the outer surface of said second elastomeric layer prior to curing thereof.

Preferably also, said striated insulation is applied as a continuous, helically wound strip, said gap being formed at the helical interface between successive turns thereof.

Alternatively, said striated insulation is applied in discrete, annular sections, said gaps being formed between adjacent sections.

Preferably also, said adhesive layer extends to within a first predetermined distance of the ends of said pipe and said elastomeric layers extend to within a second predetermined distance of the ends of said pipe, said second distance being greater than said first distance.

Preferably also, said first and second elastomeric layers are applied whilst the pipe is being rotated, by a traversing pour or traversing spray method in one or more passes.

In accordance with a second aspect of the invention, there is provided a thermally insulated and corrosion protected pipe, said insulation and corrosion protection being provided by a coating applied in accordance with the above defined methods, said coating comprising a thermally insulating layer of rigid, closed-cell foamed material encapsulated in elastomeric material, providing anticorrosion and mechanical protection.

Preferably, said insulating material is PVC and said elastomeric material is polyurethane or epoxy.

Preferably also, said first elastomeric layer is formed from a thermally insulating material resistant to temperatures exceeding 95°C, suitably syntactic polyurethane.

Preferably also, said pipe is further provided with an innermost, thin, anticorrosion layer of adhesive intermediate the outer pipe surface and the inner surface of said elastomeric material.

Preferably also said adhesive is epoxy or polyurethane adhesive.

Preferably also, said adhesive layer terminates at a first distance from each end of each length of pipe, and said elastomeric material terminates at a second distance from each end of each length of pipe, said second distance being greater than said first distance.

Preferably also, said pipe is further provided with aggregate material embedded in the outer surface of said elastomeric material.

Embodiments of the invention will now be described, by way of example only, with reference to the accompanying drawings in which:
Fig. 1 is a perspective view of strips of foamed insulation material prepared for wrapping around a pipe in accordance with a first aspect of the present invention;
Fig. 1(a) is an enlarged detail of a portion of the strip of Fig.1;
Fig. 2 is a perspective view of the reverse side of the strips of Fig.1, connected in a continuous strip by a fabric backing material;
Fig. 3 is a perspective view of a length of pipe in the process of being coated, showing the application of various coating layers in accordance with the invention;
Fig. 4 is a sectional side view of a coated pipe in accordance with the invention;
Fig. 4(a) is an enlarged, sectional detail of the pipe of Fig.4; and
Fig. 5 is a schematic side view of apparatus for applying aggregate to adhesive tape in accordance with a further aspect of the invention.
Fig. 6 is a schematic cross-section through a pipe having a coating formed thereon in accordance with still another aspect of the invention.

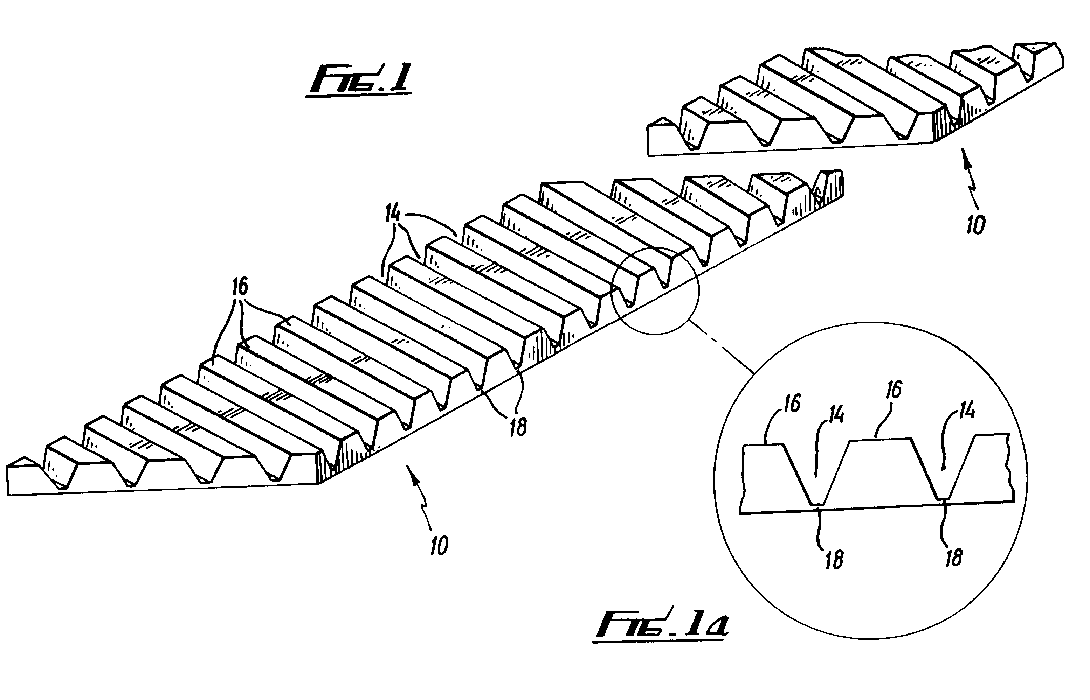

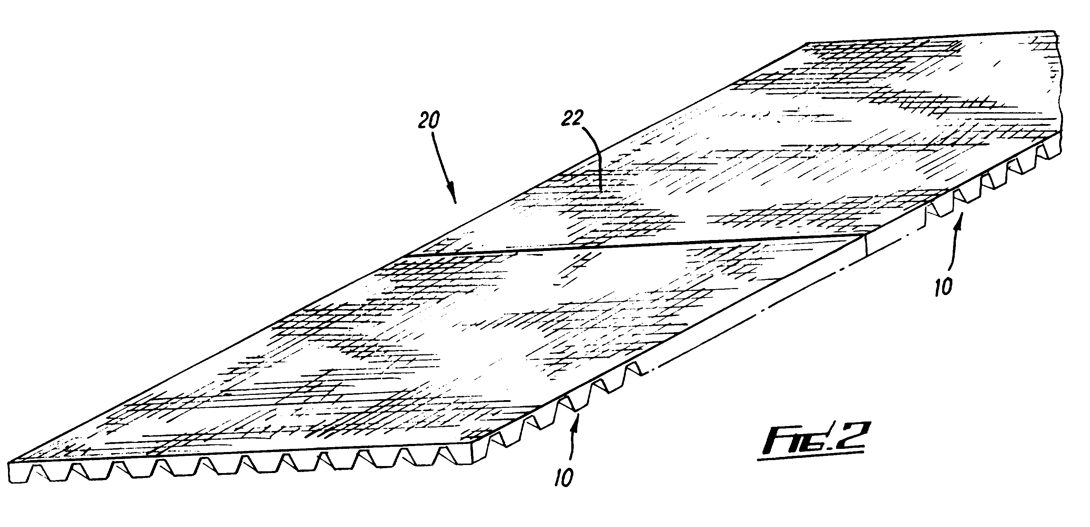

Referring now to the drawings, Figs. 1 and 2 show thermally insulating material prepared for application to a pipe. The material is preferably rigid, foamed PVC, but other types of closed cell foam might be substituted therefor. The insulation material comprises a plurality of flat blocks or sheets 10 having a plurality of parallel, V-shaped grooves or striations 14 formed in one major face thereof. The striations 14 form a series of spaced bars 16 interconnected at their bases by flexible webs 18, such that the material can be wrapped around a pipe with the striated surface facing the surface of the pipe.

Insulating material of this general type is disclosed in FR-A-2538077 and WO/89/12199, and can be applied to pipes either in separate, annular sections extending around the circumference of the pipe (in which case the striations 14 extend at right angles to the lateral edges of the strips), or, preferably and as illustrated herein, as a continuous, helically wound strip (in which case the grooves 14 are disposed at an angle to the lateral edges corresponding to the helical pitch angle, such that the grooves 14 extend parallel to the long axis of the pipe when the material is wound thereon). In the latter case a plurality of short strips are connected end to end to form a continuous strip 20 by means of a continuous strip of fabric mesh 22 affixed to the other major face of the short strips 10 with a suitable adhesive (preferably epoxy or polyurethane based), as seen in Fig. 2. The continuous strip can be temporarily wound onto a cardboard mandrel (not shown) of the same diameter as the pipe, and dispensed directly onto the pipe therefrom.

Alternatively, the strip might be reverse-wound onto a large diameter reel, with the striated surface facing outwards.

In the case of the discrete, annular sections, the bars 16 might be formed individually and connected with fabric mesh and adhesive, as with the sections of the continuous strip.

The spacing of the striations 14, the angle of the V-section and (where applicable) the pitch angle are determined by the diameter and circumference of the pipe, and the width and thickness of the insulation material. Typically, the blocks 10 of material might be 300 mm to 1100 mm in width, 10 mm to 50 mm thick, and about 130 mm in length (when applied in discrete, annular sections the length will obviously be determined by the circumference of the pipe such that the ends of each section can be mated). The spacing of the striations 14 might suitably be 1/36th of the pipe circumference, and the angle of the V-section is determined such that the striations will close upon wrapping of the material around the pipe.

In the following description, the grooved material will be referred to as "striated insulation", which in the example given is applied as a continuous, helically wound strip. It will be appreciated, however, that the method and materials described are also applicable if the insulation is applied as discrete, annular sections.

The use of striated material allows an adequate thickness of insulation to be applied in a single layer. Multiple layers can still be applied if necessary or desirable.

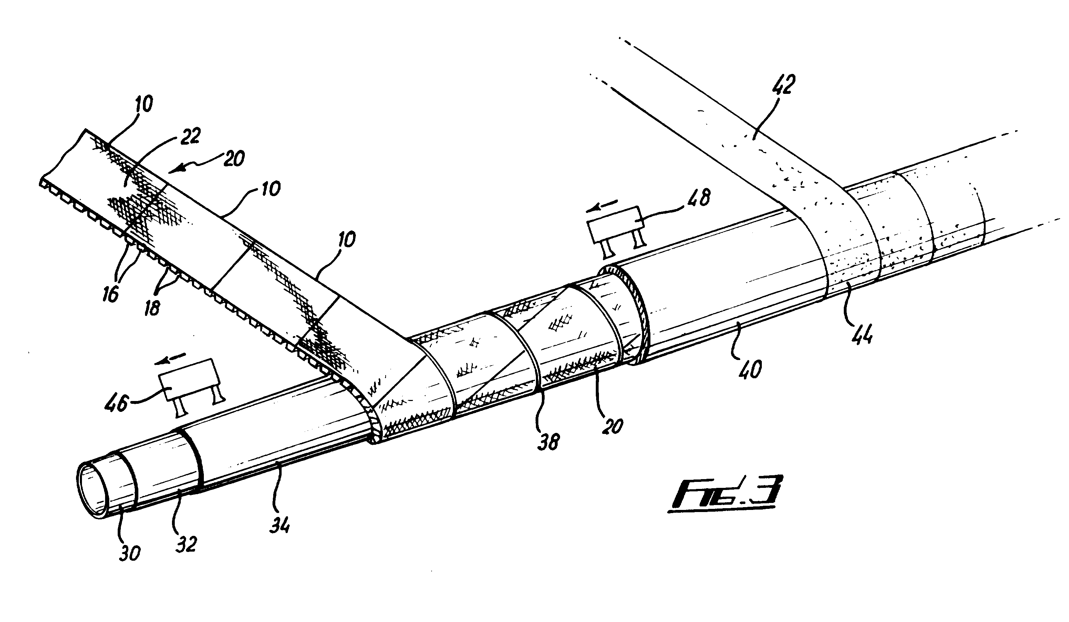

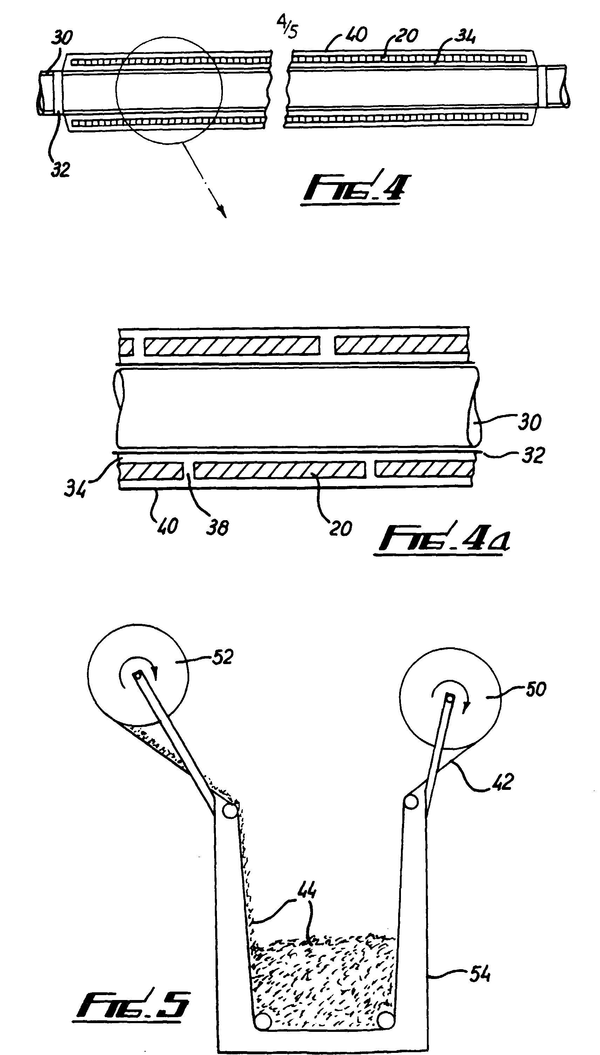

Referring now to Figs 3 and 4, a composite thermal insulation and anti-corrosion coat is applied to a pipe 30 as follows:

The pipe 30 is first coated with a thin layer of fusion bonded epoxy coating 32 and a first elastomeric anticorrosion coating 34, after which the strip 20 of insulation material is helically wound onto the pipe. As the strip 20 winds around the pipe, the bars 16 locate longitudinally of the pipe and the gaps between the bars close providing a single layer of insulation of the desired thickness. The insulation is applied in such a manner that a space of between 5 and 8 mm is formed at the interface 38 between successive turns of the strip 20.

A second coating of elastomer 40 is applied by the pressure pour ("ribbon pour" or "rotational cast") method or by spraying, filling the helical interface 38 and sealing the ends of the grooves 14 and applying a protective coating of a minimum of 5 mm thickness.

The elastomeric material of the layers 34 and 40 is preferably polyurethane or epoxy.

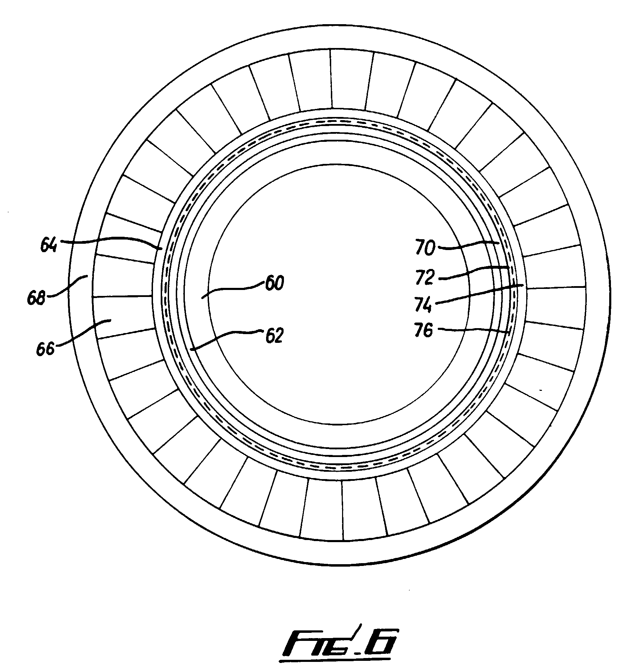

Finally, an adhesive carrier tape 42 carrying aggregate 44 is spirally wound on the uncured outer protective coating 40 before cross linking is completed. The adhesive tape 42 is removed from the coating after the elastomer has fully cured, leaving the aggregate 44 embedded on the surface of the outer protective coating 40. The application of the aggregate to the tape is illustrated in Fig. 5, and described below.

As an alternative to forced pouring, the first and second elastomers (polyurethane) coats 34 and 40 may be applied by spraying. In either case, the coats are applied at first and second traversing pouring/spraying stations 46 and 48 as the pipe is rotated, in one or more passes.

Prior art coating methods typically use EPDM rubber for elastomeric layers, which requires vulcanisation in an autoclave. Such materials do not fill gaps adequately, and may require manual filling and/or gaps to be left as voids. Bond quality may also be poor.

Polyurethane, on the other hand, cures without heat, and the gel time can be controlled between about five and twenty minutes. The first layer 34 of polyurethane might suitably be 5 mm to 10 mm thick, the striated insulation being applied before gelling is complete to ensure good bedding in the inner elastomeric layers 40. Where the inner layer 40 is to be relatively thick, it might be applied in two or more coats, the first coat(s) having a short gel time and the final coat(s) having a longer gel time.

The gap formed at the helical interface 38 of the wound strip 20 allows complete penetration by the poured/sprayed polyurethane of the second layer 40, which can be directed into the gaps, to ensure complete encapsulation and sealing of the insulation material.

The initial 400 to 500 micron coat of fusion bonded epoxy 32 (or, alternatively, polyurethane adhesive) extends to within 50 mm of the pipe ends, and the composite elastomeric coating encapsulating the insulation material extends to within 100 mm of the pipe ends. The extension of the epoxy coat 32, which provides a first anticorrosion coat, beyond the other layers simplifies the completion of field joints whilst ensuring the continuity of anticorrosion protection. Autoclaving and subsequent trimming of the elastomers would damage such a coating and would compromise the integrity of the anticorrosion protection.

Where the pipe in use will not be subject to normal impact or loading forces (eg. where the coated pipe is enclosed by a carrier pipe), a single 3 or 4 mm layer of polyurethane adhesive may be applied serving both as the adhesive layer 32 and the first elastomeric layer 34.

The application of the aggregate 44 increases the coefficient of friction of the outer surface, which is desirable for allowing tension to be applied to the pipe during pipelaying operations and for providing a key for concrete or other weight-coatings which may be required. Fig. 5 illustrates the application of the aggregate 44 to the tape 42 by spooling the tape 42 between reels 50 and 52 through a hopper 54 containing the aggregate 44. This method might also be applied to cast polyurethane coatings, by using double sided adhesive tape, coating one side thereof with aggregate, and applying the tape to the inside of the mould in which the polyurethane is cast.

The preferred thermal insulation material of the present invention is PVC foam. At pipeline temperatures in excess of 95°C the performance of such foam may be reduced with regard to compressive strength and creep resistance. Where the temperature of the pipeline exceeds 100°C and a high insulation value is required, the pipeline coating may be modified by applying a first coat of syntactic polyurethane (or similar) to a thickness of approximately 6 mm to 20 mm (preferably 6 mm to 15 mm, most preferably about 10 mm), suitably by the ribbon pour (or "rotational cast") method, prior to the application of the adhesive coat and PVC foam. The syntactic polyurethane providing a high temperature resistance matrix, serves as a preliminary insulation layer which reduces the approach temperature to the PVC to an acceptable level so as to avoid degradation thereof. The syntactic polyurethane also serves as an anticorrosion layer, replacing the anticorrosion layer previously referred to as being applied on top of the adhesive layer.

Dependent upon the pipe diameter, wall thickness and the amount of insulation coating applied, the specific gravity of the pipe may be reduced to the point where the seabed stability of the pipeline is adversely affected. This situation may be remedied by the application of a conventional concrete coating over the insulation. However, the use of an inflexible concrete weight coating has well known disadvantages. The use of a flexible (eg. polyurethane-based) weight coating is preferable. Such coatings have been proposed in the past, but have not been widely used on the grounds of cost. In the context of the integrated coating system provided by the present invention, a polyurethane based weight coating applied as part of the complete coating process in more attractive economically.

A modification of the pipe coating to provide improved impact resistance will now be described with reference to Fig. 6 of the drawing in which a pipe 60 has formed thereon a first thin layer of fusion bonded epoxy (FBE) 62, a first anticorrosion layer of elastomeric material 64, a thermally insulating layer 66, preferably formed of striated closed cell foam 66 as described above, and an outer protective layer of elastomeric material 68. The elastomeric layers 64 and 68 are preferably of polyurethane, and the whole is preferably formed in accordance with the methods previously described.

In accordance with the present modification, the first elastomeric layer 64 is a composite layer having inner, middle and outer layers 70, 72 and 74 respectively, in which the inner and outer layers 70, 74 are formed from a first elastomeric material having a first tensile strength and the middle layer 72 is formed from a second elastomeric material having a tensile strength less than that of the inner and outer layers 70, 74. Preferably, the inner and outer layers 70, 74 are formed from high performance polyurethane, typically having a tensile strength of 38 MPa, and the middle layer 72 is formed from standard polyurethane, typically having a tensile strength of approximately 16 MPa. Each of the layers 70, 72, 74 is suitably about 2 mm thick, giving a total thickness of 6 mm for the composite layer 64. The three layers 70, 72, 74 can be formed simultaneously in a single pass by a three-head applicator device.

The composite layer 64 significantly enhances the impact absorption characteristics of the coated pipe.

The sectional view shown in the drawing is of a schematic nature and it will be understood that the diameter of the pipe and relative proportions of the various layers have been altered for the sake of clarity.

The impact-resistant structure is preferably incorporated in a coating in accordance with the first and second aspects of the invention, but may find application in other coating systems.

Impact resistance may be further enhanced, particularly at elevated temperatures, by incorporating a layer 76 of relatively rigid mesh material (such as fibre glass or metal) in the central layer 72 of the first elastomeric layer 64.

As can be seen from the foregoing, the invention provides improved methods of applying thermal insulation/anticorrosion coatings to a pipe, an improved, coated pipe formed by such methods, improved impact resistance for pipe coatings, and a method of applying aggregate to the exterior surface of elastomeric coatings.

## Claims

1. A method of applying a thermally insulating anticorrosion coating to a pipe, comprising the steps of: applying a first, inner elastomeric, anticorrosion layer (34) to the pipe (30); applying a layer of thermally insulating material (20) over said first elastomeric layer in the form of striated, rigid, closed-cell, foamed material wrapped around said pipe; and applying a second, outer elastomeric, protective layer (40) over said insulating layer, characterised in that a predetermined gap (38) is formed between sections of said wrapped insulating material sufficient to ensure penetration by said second layer (40) of elastomeric material into said gaps so as to encapsulate said insulating material (20).

2. A method as claimed in Claim 1, where in said thermally insulating material (20) is PVC.

3. A method as claimed in Claim 1 or Claim 2, wherein said first and second elastomeric layers (34, 40) are formed from polyurethane or epoxy.

4. A method as claimed in Claim 1 or Claim 2, wherein said first elastomeric layer (34) is formed from a thermally insulating material resistant to temperatures exceeding 95°C.

5. A method as claimed in Claim 4, wherein said thermally insulating material (20) is syntactic polyurethane.

6. A method as Claimed in any preceding Claim, wherein said thermally insulating layer (20) is applied before cross-linking of said first elastomeric layer is completed.

7. A method as claimed in any preceding Claim, wherein said second elastomeric layer (40) is applied by pouring or spraying, so as to fill said gaps (38) and seal the ends of said striations.

8. A method as claimed in any preceding Claim, wherein a thin adhesive anticorrosion layer (32) is applied to said pipe prior to the application of said first elastomeric layer.

9. A method as claimed in Claim 8, wherein said adhesive layer (32) is epoxy or polyurethane adhesive.

10. A method as claimed in Claim 8 or Claim 9, wherein said adhesive layer (32) extends to within a first predetermined distance of the ends of said pipe and said elastomeric layers (34, 40) extend to within a second predetermined distance of the ends of said pipe, said second distance being greater than said first distance.

11. A method as claimed in any preceding Claim, wherein an aggregate material (44) is applied to the outer surface of said second elastomeric layer (40) prior to curing thereof.

12. A method as claimed in any preceding Claim, wherein said striated insulation (20) is applied as a continuous, helically wound strip, said gap being formed at the helical interface between successive turns thereof.

13. A method as claimed in any one of Claims 1 to 11, wherein said striated insulation (20) is applied in discrete, annular sections, said gaps being formed between adjacent sections.

14. A method as claimed in any preceding Claim wherein said first and second elastomeric layers (34, 40) are applied whilst the pipe is being rotated, by a traversing pour or traversing spray method in one or more passes.

15. A thermally insulated and corrosion protected pipe (30), said insulation and corrosion protection being provided by a coating applied in accordance with the method as claimed in any one of Claims 1 to 14.

16. A pipe as claimed in Claim 15, wherein said thermally insulating material (20) is PVC.

17. A pipe as claimed in Claim 15 or Claim 16, wherein, said elastomeric material (34, 40) is polyurethane or epoxy.

18. A pipe as claimed in Claim 17, wherein said first elastomeric layer (34) is formed from a thermally insulating material resistant to temperatures exceeding 95°C.

19. A pipe as claimed in Claim 18, wherein said thermally insulating material (20) is syntactic polyurethane.

20. A pipe as claimed in any one of Claims 15 to 19, wherein said pipe is further provided with an innermost, thin, anticorrosion layer of adhesive (32) intermediate the outer pipe surface and the inner surface of said elastomeric material.

21. A pipe as claimed in Claim 20, wherein said adhesive (32) is epoxy or polyurethane adhesive.

22. A pipe as claimed in Claim 20 or 21, wherein said adhesive layer (32) terminates at a first distance from each end of each length of pipe, and said elastomeric material (34, 40) terminates at a second distance from each end of each length of pipe, said second distance being greater than said first distance.

23. A pipe as claimed in any one of Claims 15 to 22, wherein said pipe is further provided with aggregate material (44) embedded in the outer surface of said elastomeric material.

## Patentansprüche

1. Verfahren zur Anbringung einer thermisch isolierenden Antikorrosionsbeschichtung an einem Rohr, bestehend aus den Stufen: Anbringung einer ersten, inneren, elastomeren Antikorrosionsschicht (34) an dem Rohr (30), Anbringung einer Schicht eines thermischen Isoliermaterials (20) über dieser ersten elastomeren Schicht in der Form eines gefurchten oder streifenförmigen, steifen Schaummaterials mit geschlossenen Zellen, das um das Rohr herum gewickelt ist; und Anbringung einer zweiten, äußeren, elastomeren Schutzschicht (40) über dieser Isolierschicht, dadurch gekennzeichnet, daß ein vorbestimmter Spalt (38) zwischen Bereichen des umwickelten Isoliermaterials ausgebildet wird, der ausreicht, ein Eindringen der zweiten Schicht (40) des elastomeren Materials in diese Spalte zu sichern, sodaß das Isoliermaterial (20) eingekapselt wird.

2. Verfahren nach Anspruch 1, bei welchem das thermische Isoliermaterial (20) PVC ist.

3. Verfahren nach Anspruch 1 oder Anspruch 2, bei welchem die ersten und zweiten elastomeren Schichten (34, 40) aus Polyurethan oder Epoxy gebildet werden.

4. Verfahren nach Anspruch 1 oder Anspruch 2, bei welchem die erste elastomere Schicht (34) aus einem thermischen Isoliermaterial gebildet wird, das gegenüber Temperaturen höher als 95°C beständig ist.

5. Verfahren nach Anspruch 4, bei welchem das thermische Isoliermaterial (20) syntaktisches Polyurethan ist.

6. Verfahren nach einem der vorhergehenden Ansprüche, bei welchem die thermische Isolierschicht (20) aufgebracht wird, bevor die Vernetzung der ersten elastomeren Schicht beendet ist.

7. Verfahren nach einem der vorhergehenden Ansprüche, bei welchem die zweite elastomere Schicht (40) durch ein Vergießen oder ein Sprühen aufgebracht wird, sodaß die Spalte (38) gefüllt und die Enden der Furchen abgedichtet werden.

8. Verfahren nach einem der vorhergehenden Ansprüche, bei welchem eine dünne Antikorrosionshaftschicht (32) an dem Rohr vor der Anbringung der ersten elastomeren Schicht angebracht wird.

9. Verfahren nach Anspruch 8, bei welchem die Haftschicht (32) ein Epoxy- oder Polyurethanhaftmittel ist.

10. Verfahren nach Anspruch 8 oder Anspruch 9, bei welchem die Haftschicht (32) innerhalb eines ersten vorbestimmten Abstandes von den Enden des Rohres verläuft und die elastomeren Schichten (34, 40) innerhalb eines zweiten vorbestimmten Abstandes von den Enden des Rohres verlaufen, wobei der zweite Abstand größer ist als der erste Abstand.

11. Verfahren nach einem der vorhergehenden Ansprüche, bei welchem ein Aggregatmaterial (44) an der Außenfläche der zweiten elastomeren Schicht (40) vor deren Aushärtung angebracht wird.

12. Verfahren nach einem der vorhergehenden Ansprüche, bei welchem die gefurchte oder streifenförmige Isolierung (20) als ein kontinuierlicher, schraubenförmig gewickelter Streifen angebracht wird, wobei der Spalt an dem schraubenförmigen Übergang zwischen aufeinanderfolgenden Windungen ausgebildet wird.

13. Verfahren nach einem der Ansprüche 1 bis 11, bei welchem die gefurchte oder streifenförmige Isolierung (20) in diskreten ringförmigen Bereichen angebracht wird, wobei die Spalte zwischen benachbarten Bereichen ausgebildet werden.

14. Verfahren nach einem der vorhergehenden Ansprüche, bei welchem die ersten und zweiten elastomeren Schichten (34, 40) durch ein überquerendes Gieß- oder ein überquerendes Sprühverfahren mit einem oder mehreren Durchgängen angebracht werden, während das Rohr gedreht wird.

15. Thermisch isoliertes und gegen Korrosion geschütztes Rohr (30), wobei der Isolier- und Korrosionsschutz durch eine Beschichtung vorgesehen ist, die gemäß dem Verfahren nach einem der Ansprüche 1 bis 4 angebracht wurde.

16. Rohr nach Anspruch 15, bei welchem das thermische Isoliermaterial (20) PVC ist.

17. Rohr nach Anspruch 15 oder Anspruch 16, bei welchem das elastomere Material (34, 40) Polyurethan oder Epoxy ist.

18. Rohr nach Anspruch 17, bei welchem die erste elastomere Schicht (34) aus einem thermischen Isoliermaterial besteht, das gegenüber Temperaturen höher als 95°C beständig ist.

19. Rohr nach Anspruch 18, bei welchem das thermische Isoliermaterial (20) syntaktisches Polyurethan ist.

20. Verfahren nach einem der Ansprüche 15 bis 19, bei welchem das Rohr weiterhin mit einer innersten, dünnen Antikorrosionshaftschicht (32) zwischen der Rohraußenfläche und der Innenfläche des elastomeren Materials versehen ist.

21. Rohr nach Anspruch 20, bei welchem das Haftmittel (32) ein Epoxy- oder Polyurethanhaftmittel ist.

22. Rohr nach Anspruch 20 oder 21, bei welchem die Haftmittelschicht (32) in einem ersten Abstand von jedem Ende jeder Rohrlänge endet und das elastomere Material (34, 40) in einem zweiten Abstand von jedem Ende jeder Rohrlänge endet, wobei der zweite Abstand größer ist als der erste Abstand.

23. Rohr nach einem der Ansprüche 15 bis 22, bei welchem das Rohr weiterhin mit einem Aggregatmaterial (44) versehen ist, das in die Außenfläche des elastomeren Materials eingebettet ist.

## Revendications

1. Procédé pour appliquer sur un tuyau un revêtement anticorrosion et isolant thermique, comprenant les étapes de : appliquer sur le tuyau (30) une première couche (34) anticorrosion intérieure en élastomère ; appliquer par-dessus la première couche en élastomère une couche de matériau isolant thermique (20) sous la forme d'un matériau en mousse à cellules fermées, rigide et strié enroulé autour dudit tuyau ; et appliquer par-dessus ladite couche isolante une seconde couche (40) protectrice extérieure en élastomère, caractérisé en ce qu'un espace prédéterminé (38) est formé entre des tronçons dudit matériau isolant enroulé, espace suffisant pour assurer la pénétration par ladite seconde couche (40) de matériau élastomère à l'intérieur desdits espaces de façon à encapsuler ledit matériau isolant (20).

2. Procédé selon la revendication 1, dans lequel du PVC se trouve dans ledit matériau isolant thermique (20).

3. Procédé selon la revendication 1 ou la revendication 2, dans lequel lesdites première et seconde couches (34, 40) en élastomère sont formées à partir de polyuréthanne ou d'époxy.

4. Procédé selon la revendication 1 ou la revendication 2, dans lequel ladite première couche (34) en élastomère est formée à partir d'un matériau isolant thermique résistant à des températures excédant 95°C.

5. Procédé selon la revendication 4, dans lequel ledit matériau isolant thermique (20) est du polyuréthanne syntactique.

6. Procédé selon l'une quelconque des revendications précédentes, dans lequel ladite couche thermiquememt isolante (20) est appliquée avant que la réticulation de ladite première couche d'élastomère soit achevée.

7. Procédé selon l'une quelconque des revendications précédentes, dans lequel ladite seconde couche (40) d'élastomère est appliquée par coulée ou par pulvérisation, de façon à remplir lesdits espaces (38) et à sceler de façon étanche les extrémités desdites stries.

8. Procédé selon l'une quelconque des revendications précédentes, dans lequel une fine couche anticorrosion adhésive (32) est appliquée sur ledit tuyau avant l'application de ladite première couche en élastomère.

9. Procédé selon la revendication 8, dans lequel ladite couche adhésive (32) est un adhésif époxy ou polyuréthanne.

10. Procédé selon la revendication 8 ou la revendication 9, dans lequel ladite couche adhésive (32) s'étend jusqu'à une première distance prédéterminée des extrémités dudit tuyau et lesdites couches en élastomère (34, 40) s'étendent jusqu'à une seconde distance prédéterminée des extrémités dudit tuyau, ladite seconde distance étant plus grande que ladite première distance.

11. Procédé selon l'une quelconque des revendications précédentes, dans lequel un matériau granuleux (44) est appliqué sur la surface extérieure de ladite seconde couche (40) en élastomère avant sa polymérisation.

12. Procédé selon l'une quelconque des revendications précédentes, dans lequel ladite isolation (20) striée est appliquée sous forme d'une bande continue enroulée en hélice, ledit espace étant formé à l'interface d'hélice entre deux spires successives.

13. Procédé selon l'une quelconque des revendications 1 à 11, dans lequel ladite isolation striée (20) est appliquée selon des tronçons annulaires distincts, lesdits espaces étant formés entre des tronçons adjacents.

14. Procédé selon l'une quelconque des revendications précédentes, dans lequel lesdites première et seconde couches (34, 40) en élastomère sont appliquées pendant que le tuyau est entraîné en rotation, par un procédé de coulée ou de pulvérisation par balayage en une ou plusieurs passes.

15. Tuyau (30) isolé thermiquement et protégé de la corrosion, ladite isolation et ladite protection contre la corrosion étant assurées par un revêtement appliqué selon le procédé tel que revendiqué dans l'une quelconque des revendications 1 à 14.

16. Tuyau selon la revendication 15, dans lequel ledit matériau isolant thermique (20) est le PVC.

17. Tuyau selon la revendication 15 ou la revendication 16, dans lequel ledit matériau élastomère (34, 40) est le polyuréthanne ou l'époxy.

18. Tuyau selon la revendication 17, dans lequel ladite première couche (34) en élastomère est formée à partir d'un matériau isolant thermique résistant à des températures excédant 95°C.

19. Tuyau selon la revendication 18, dans lequel ledit matériau isolant thermique (20) est le polyuréthanne syntactique.

20. Tuyau selon l'une quelconque des revendications 15 à 19, dans lequel ledit tuyau est en outre muni d'une couche intérieure fine anticorrosion d'adhésif (32) entre la surface extérieure du tuyau et la surface intérieure dudit matériau élastomère.

21. Tuyau selon la revendication 20, dans lequel ledit adhésif (32) est un adhésif époxy ou polyuréthanne.

22. Tuyau selon la revendication 20 ou la revendication 21, dans lequel ladite couche adhésive (32) se termine à une première distance de chacune des extrémités de chaque longueur de tuyau, et ledit matériau élastomère (34, 40) se termine à une seconde distance de chaque extrémité de chaque longueur de tuyau, ladite seconde distance étant plus grande que ladite première distance.

23. Tuyau selon l'une quelconque des revendications 15 à 22, dans lequel ledit tuyau est en outre muni d'un matériau granuleux (44) noyé dans la surface extérieure dudit matériau élastomère.
